# EUROPEAN PATENT APPLICATION

(11) **EP 4 772 997 A1**
(43) Date of publication of application: **08.07.2026**
(21) Application number: 25869669.9
(22) Date of filing: 11.09.2025
(51) Int. Cl.: G06F 8/658

(54) **OVER-THE-AIR UPGRADE METHOD AND SYSTEM FOR COMPRESSED FIRMWARE**

(30) Priority: 24.10.2024 CN 202411494863
(71) Applicant: ASR Microelectronics Co., Ltd., Shanghai 201203 (CN)
(72) Inventor: SHI, Huaiwen, Shanghai 201203 (CN); HUANG, Yongjia, Shanghai 201203 (CN); ZHOU, Jin, Shanghai 201203 (CN); LEI, Yang, Shanghai 201203 (CN)
(74) Representative: Bayramoglu et al.
(86) International application number: PCT/CN2025/120734
(87) International publication number: WO 2026/086473

(57) **Abstract**

The present disclosure provides a method for over-the-air update of compressed firmware, including the following steps: step S1: dividing firmware of an electronic device into a plurality of partitions at a firmware compilation stage, where each partition includes one or more functional modules, and each partition has substantially a same size after being compressed; step S2: compressing the firmware of the electronic device on a partition basis, recording relevant information of a compressed partition during the compression, and storing relevant information of all compressed partitions in a header of compressed firmware of the electronic device in a form of a data loading table; step S3: generating an update file table, obtaining differential data of the data loading table and differential data of each partition, and sequentially assembling to obtain a differential update file; and step S4: updating, by the electronic device after acquiring the differential update file for new compressed firmware and old compressed firmware, the data loading table, and then updating the firmware on a compressed partition basis. According to the present disclosure, a best differential effect is achieved, and a small storage space is occupied by power failure protection in an update process.

## Description

### TECHNICAL FIELD

The present disclosure relates to a Firmware Over-the-Air (FOTA) update (which is also referred to as over-the-air firmware update) method for an electronic device.

### BACKGROUND TECHNOLOGY

Firmware Over-the-Air (FOTA) update for an electronic device generally uses a differential method, which has the advantages of a small size of a differential update file and low storage space occupation in a non-volatile memory. Some electronic devices are equipped with a non-volatile memory with a limited capacity, and firmware is further compressed before being stored, so as to further reduce an occupied storage space in the non-volatile memory. However, differential update exhibits unsatisfactory performance when being applied to compressed firmware. A differential result of the compressed firmware is usually much larger than a differential result of uncompressed firmware, and cannot truly reflect a data change in the firmware. For example, if new firmware and old firmware differ by only 3 bytes, a generated differential update file is only 1 KB; whereas a differential update file generated for compressed new firmware and compressed old firmware is as large as 1242 KB.

The electronic device needs to implement a power failure protection mechanism when replacing the old firmware with the new firmware, in other words, backs up the old firmware or the new firmware. At present, the entire firmware (whether it is compressed or uncompressed) is backed up, which occupies a relatively large storage space in the non-volatile memory.

### CONTENT OF THE INVENTION

A technical problem to be solved by the present disclosure is how to perform over-the-air update on compressed firmware by using a differential method, so as to implement a power failure protection mechanism while reducing a size of a differential update file, and significantly reduce occupation of a backup space.

In order to solve the above technical problem, the present disclosure provides a method for over-the-air update of compressed firmware, including following steps: step S1: dividing firmware of an electronic device into a plurality of partitions at a firmware compilation stage, where each of the plurality of partitions includes one or more functional modules, and each of the plurality of partitions has substantially a same size after being compressed; step S2: compressing the firmware of the electronic device on a partition basis, and obtaining compressed firmware of the electronic device, where a partition that is compressed is referred to as a compressed partition; recording relevant information of the compressed partition during the compression; and storing relevant information of all compressed partitions in a header of the compressed firmware of the electronic device in a form of a data loading table; step S3: generating an update file table; performing a differential operation on a data loading table of new compressed firmware and the data loading table of the old compressed firmware, and obtaining differential data of the data loading table; performing the differential operation on decompressed data of each partition in new firmware and decompressed data of the corresponding partition in the old firmware, and obtaining differential data of each partition; and sequentially assembling the above three parts into a differential update file for the new compressed firmware and the old compressed firmware; and step S4: updating, by the electronic device after acquiring the differential update file for the new compressed firmware and the old compressed firmware, the data loading table, and then updating the firmware on a compressed partition basis.

Further, in the step S2, the relevant information of the compressed partition includes a running address and a size of uncompressed data in the compressed partition in a memory of the electronic device, a storage address and a size of compressed data in a non-volatile memory of the electronic device, and a check value of the compressed data.

Further, in the step S3, the update file table records compressed partitions that require updating and compressed partitions that require no updating; if there is no change between a functional module in a compressed partition in the new compressed firmware and the functional module in the compressed partition in the old compressed firmware, no differential data is generated for the compressed partition; and differential data is generated for a compressed partition only when there is a change between a functional module in the compressed partition in the new compressed firmware and the functional module in the compressed partition in the old compressed firmware.

Further, in the step S3, if the new compressed firmware adds a functional module compared with the old compressed firmware, a new compressed partition is added in the new compressed firmware to store the added functional module.

Further, in the step S4, the updating the data loading table specifically includes following substeps: step S410: backing up the data loading table of the old compressed firmware; step S411: restoring the data loading table of the new compressed firmware based on the data loading table of the old compressed firmware and the differential data of the data loading table; step S412: replacing the data loading table of the old compressed firmware with the data loading table of the new compressed firmware; and step S413: deleting the backed-up data loading table of the old compressed firmware.

Further, in the step S4, the updating the firmware on the compressed partition basis specifically includes following substeps: step S420: parsing the update file table in the differential update file, and determining compressed partitions that require updating and compressed partitions that require no updating; step S421: backing up data of an old compressed partition; step S422: decompressing the data of the old compressed partition, and obtaining data of the corresponding partition in the old firmware; step S423: restoring data of the corresponding partition in the new firmware based on the data of the corresponding partition in the old firmware and differential data of the corresponding partition; step S424: compressing the data of the corresponding partition in the new firmware, and obtaining data of a new compressed partition; step S425: replacing the data of the old compressed partition with the data of the new compressed partition; step S426: deleting the backed-up data of the old compressed partition; and repeating the steps S421 to S426 until update operations of all the compressed partitions that require updating are completed.

Further, in the step S4, the updating the firmware on the compressed partition basis specifically includes following substeps: step S430: parsing the update file table in the differential update file, and determining compressed partitions that require updating and compressed partitions that require no updating; step S431: decompressing data of an old compressed partition, and obtaining data of the corresponding partition in the old firmware; step S432: restoring data of the corresponding partition in the new firmware based on the data of the corresponding partition in the old firmware and differential data of the corresponding partition; step S433: compressing the data of the corresponding partition in the new firmware, and obtaining data of a new compressed partition; step S434: backing up the data of the new compressed partition; step S435: replacing the data of the old compressed partition with the data of the new compressed partition; step S436: deleting the backed-up data of the new compressed partition; and repeating the steps S431 to S436 until update operations of all the compressed partitions that require updating are completed.

Further, in the step S4, the updating the firmware on the compressed partition basis specifically includes following substeps: step S440: parsing the update file table in the differential update file, determining compressed partitions that require updating and compressed partitions that require no updating, and determining whether the compressed partitions that require updating become larger and whether there are other compressed partitions behind the compressed partitions that require updating; and if a volume of a compressed partition M that requires updating becomes larger and there is a compressed partition N behind the compressed partition M, proceeding to step S441; step S441: backing up data of the old compressed partition M, and backing up, based on a volume difference Δ between a new compressed partition M and the old compressed partition M, first Δ-sized data of the old compressed partition N, where a partition N is a partition immediately following a partition M, and Δ>0; step S442: decompressing the data of the old compressed partition M, and obtaining data of the partition M in the old firmware; step S443: restoring data of the partition M in the new firmware based on the data of the partition M in the old firmware and differential data of the partition M; step S444: compressing the data of the partition M in the new firmware, and obtaining data of the new compressed partition M; step S445: replacing the data of the old compressed partition M with the data of the new compressed partition M, where in the process, the first Δ-sized data of the old compressed partition N is also overwritten; step S446: determining whether the compressed partition N requires updating; and if the compressed partition N requires no updating, proceeding to step S447; or if the compressed partition N requires updating, combining remaining data of the old compressed partition N after the first Δ-sized data is removed and the backed-up first Δ-sized data of the old compressed partition N into complete data of the old compressed partition N, proceeding to step S440, changing the compressed partition M mentioned in the step S440 to the compressed partition N, and changing the compressed partition N mentioned in the step S440 to a next compressed partition of the compressed partition N; step S447: shifting all data behind the new compressed partition M backward by a size of Δ, where the data behind the new compressed partition M includes: the remaining data of the old compressed partition N after the first Δ-sized data is removed, and data of each old compressed partition behind the old compressed partition N; and after this step is performed, a Δ-sized free space is formed behind the new compressed partition M and before all the shifted data; step S448: filling the backed-up first Δ-sized data of the old compressed partition N into the Δ-sized free space, such that data of the old compressed partition N becomes complete; step S449: deleting the backed-up data of the old compressed partition M and the backed-up first Δ-sized data of the old compressed partition N; and repeating the steps S441 to S449 until update operations of all the compressed partitions that require updating are completed.

Further, in the step S4, the updating the firmware on the compressed partition basis specifically includes following substeps: step S450: parsing the update file table in the differential update file, determining compressed partitions that require updating and compressed partitions that require no updating, and determining whether the compressed partitions that require updating become larger and whether there are other compressed partitions behind the compressed partitions that require updating; and if a volume of a compressed partition M that requires updating becomes larger and there is a compressed partition N behind the compressed partition M, proceeding to step S451; step S451: decompressing data of the old compressed partition M, and obtaining data of a partition M in the old firmware; step S452: restoring data of the partition M in the new firmware based on the data of the partition M in the old firmware and differential data of the partition M; step S453: compressing the data of the partition M in the new firmware, and obtaining data of a new compressed partition M; step S454: backing up the data of the new compressed partition M, and backing up, based on a volume difference Δ between the new compressed partition M and the old compressed partition M, the first Δ-sized data of the old compressed partition N, where a partition N is a partition immediately following the partition M, and Δ>0; step S455: replacing the data of the old compressed partition M with the data of the new compressed partition M, where in the process, the first Δ-sized data of the old compressed partition N is also overwritten, such that data of the old compressed partition N becomes incomplete; step S456: determining whether the compressed partition N requires updating; and if the compressed partition N requires no updating, proceeding to step S457; or if the compressed partition N requires updating, combining remaining data of the old compressed partition N after the first Δ-sized data is removed and the backed-up first Δ-sized data of the old compressed partition N into complete data of the old compressed partition N, proceeding to step S450, changing the compressed partition M mentioned in the step S450 to the compressed partition N, and changing the compressed partition N mentioned in the step S450 to a next compressed partition of the compressed partition N; step S457: shifting all data behind the new compressed partition M backward by a size of Δ, such that a Δ-sized free space is formed behind the new compressed partition M and before all the shifted data; step S458: filling the backed-up first Δ-sized data of the old compressed partition N into the Δ-sized free space, such that the data of the old compressed partition N becomes complete; step S459: deleting the backed-up data of the new compressed partition M and the backed-up first Δ-sized data of the old compressed partition N; and repeating the steps S451 to S459 until update operations of all the compressed partitions that require updating are completed.

The present disclosure further provides a system for over-the-air update of compressed firmware, including a partition division unit, a partition compression unit, a partition differentiation unit, and a partition update unit, where the partition division unit is configured to divide firmware of an electronic device into a plurality of partitions at a firmware compilation stage, where each of the plurality of partitions includes one or more functional modules, and each of the plurality of partitions has substantially a same size after being compressed; the partition compression unit is configured to compress the firmware of the electronic device on a partition basis, and obtain compressed firmware of the electronic device, where a partition that is compressed is referred to as a compressed partition; record relevant information of the compressed partition during the compression; and store relevant information of all compressed partitions in a header of the compressed firmware of the electronic device in a form of a data loading table; the partition differentiation unit is configured to generate an update file table; perform a differential operation on a data loading table of new compressed firmware and the data loading table of the old compressed firmware, and obtain differential data of the data loading table; perform the differential operation on decompressed data of each partition in new firmware and decompressed data of the corresponding partition in the old firmware, and obtain differential data of each partition; and sequentially combine the above three parts into a differential update file for the new compressed firmware and the old compressed firmware; and the partition update unit is configured to: after the electronic device acquires the differential update file for the new compressed firmware and the old compressed firmware, update the data loading table, and then update the firmware on a compressed partition basis.

The present disclosure achieves the following technical effects: A best differential effect is achieved by compressing firmware on a partition basis, generating differential data on the partition basis, and updating the firmware on a compressed partition basis, and a small storage space is occupied by power failure protection in an update process.

### DESCRIPTION OF THE DRAWINGS

FIG. 1 is a schematic flowchart of a method for over-the-air update of compressed firmware according to the present disclosure;
FIG. 2 is a schematic diagram of a relationship among firmware, a partition, and a functional module of an electronic device;
FIG. 3 is a schematic diagram of a relationship among firmware, a partition, compressed firmware, and a compressed partition of an electronic device;
FIG. 4 is a schematic diagram of generating a differential update file in the case of a first change between new compressed firmware and old compressed firmware;
FIG. 5 is a schematic diagram of generating a differential update file in the case of a second change between new compressed firmware and old compressed firmware;
FIG. 6 is a specific schematic flowchart of updating a data loading table in step S4;
FIG. 7 is a specific schematic flowchart illustrating a first example of updating firmware on a compressed partition basis in step S4;
FIG. 8 is a specific schematic flowchart illustrating a second example of updating firmware on a compressed partition basis in step S4;
FIG. 9 is a specific schematic flowchart illustrating a third example of updating firmware on a compressed partition basis in step S4;
FIG. 10 is a specific schematic flowchart illustrating a fourth example of updating firmware on a compressed partition basis in step S4; and
FIG. 11 is a schematic structural diagram of a system for over-the-air update of compressed firmware according to the present disclosure.

Reference numerals in the accompanying drawings: 1: partition division unit; 2: partition compression unit; 3: partition differentiation unit; 4: partition update unit.

### SPECIFIC IMPLEMENTATIONS

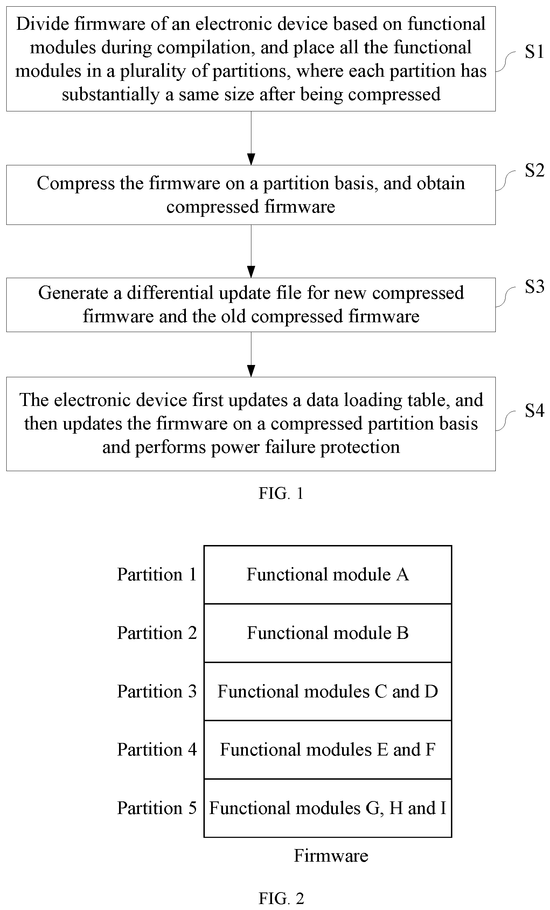

Referring to FIG. 1, a method for over-the-air update of compressed firmware provided in the present disclosure includes the following steps:
Step S1: At a firmware compilation stage, compiled firmware of an electronic device is divided based on functional modules, and all the functional modules are stored in a plurality of partitions. A size of each partition satisfies a following condition: each partition has substantially a same size after being compressed (with a small difference), for example, varying within a range of 10%, or further limited to within a range of 5% or 3%. In this way, the firmware of the electronic device is divided into a plurality of partitions, and each partition contains one or more functional modules. All the partitions together constitute the complete firmware of the electronic device. As an example, as shown in FIG. 2, complete firmware of an electronic device is divided into five partitions, and each partition stores one or more functional modules.

In this step, a certain quantity of partitions are obtained through division during firmware compilation, and the functional modules are assigned to the partitions. Such firmware partitioning and storage of the functional modules achieve the following benefits: Firstly, the present disclosure subsequently generates a differential update file on a partition basis. If a functional module in a partition remains unchanged, no differential data is generated for the partition. Secondly, the present disclosure subsequently performs firmware update and power failure protection on the partition basis, where only compressed partition data is backed up. To minimize a backup space and save storage resources, there should be as numerous partitions as possible. However, since each functional module may have a different size, it is unreasonable to separately allocate a partition for each functional module. According to the present disclosure, a plurality of small-volume functional modules are placed into one partition, and a large-volume functional module is placed into a separate partition, such that each partition has substantially the same size after being compressed, thereby saving the backup space. Thirdly, if a new functional module is to be added, a new partition is added, and the new functional module is stored in the new partition. The new partition is appended at an end of the old firmware without affecting the existing partitions. A differential update file of the new partition is data of the new partition, achieving a best differential effect.

Step S2: The firmware of the electronic device is compressed on the partition basis, and compressed firmware of the electronic device is obtained. Specifically, each partition is compressed, and a partition that is compressed is referred to as a compressed partition. During the compression, relevant information of the compressed partition is recorded, including a running address (physical address for running) and a size of uncompressed data in the compressed partition in a memory of the electronic device, a storage address and a size of compressed data in a non-volatile memory of the electronic device, a check value of the compressed data, and the like. All compressed partitions are concatenated to form complete compressed firmware of the electronic device. Relevant information of all the compressed partitions is stored in a header of the complete compressed firmware of the electronic device in a form of a data loading table (loadtable). The purpose of the data loading table is as follows: during system startup, the data loading table is parsed to decompress and load data of the compressed partition into a physical address piece by piece for execution.

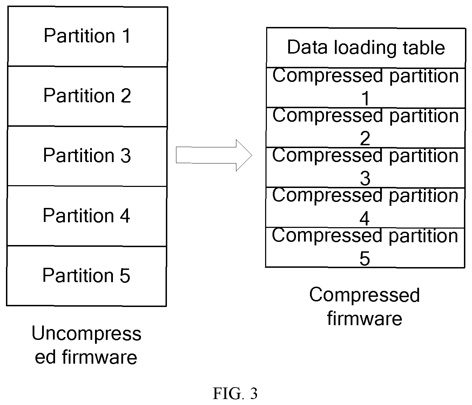

As an example, as shown in FIG. 3, uncompressed firmware of an electronic device is processed according to the step S2 to obtain compressed firmware, which consists of a data loading table in a header and subsequent compressed partitions. The uncompressed firmware and the compressed firmware correspond to each other, and each partition in the uncompressed firmware is in one-to-one correspondence with each compressed partition in the compressed firmware.

Step S3: An update file table is generated. The update file table records compressed partitions that require updating and compressed partitions that require no updating in new compressed firmware of the electronic device, as compared with the old compressed firmware. A data loading table of the new compressed firmware of the electronic device and the data loading table of the old compressed firmware of the electronic device are parsed. A differential operation is performed on the data loading table of the new compressed firmware and the data loading table of the old compressed firmware, and differential data of the data loading table is obtained. Each to-be-updated compressed partition in the new compressed firmware and the corresponding compressed partition in the old compressed firmware are decompressed, and decompressed data of each to-be-updated partition in new firmware and decompressed data of the corresponding partition in the old firmware are obtained. The differential operation is performed on the decompressed data of each to-be-updated partition in the new firmware and the decompressed data of the corresponding partition in the old firmware, and differential data of each to-be-updated partition is obtained. The update file table, the differential data of the data loading table, and the differential data of each to-be-updated partition are sequentially assembled into a complete differential update file for the new compressed firmware and the old compressed firmware.

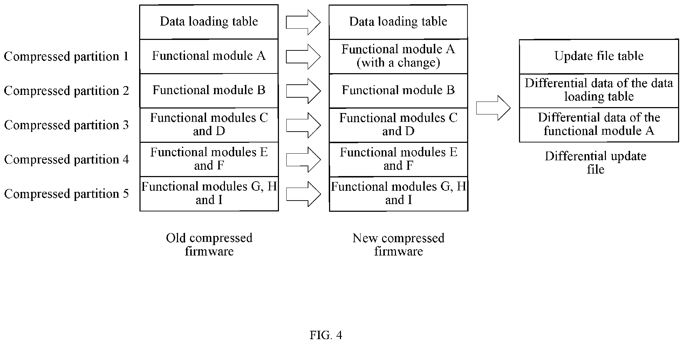

As a first example, as shown in FIG. 4, in the new compressed firmware and the old compressed firmware, if only functional module A in a compressed partition changes, the differential update file for the new compressed firmware and the old compressed firmware includes only the update file table, the differential data of the data loading table, and differential data of the functional module A. The differential data of the functional module A is differential data of the partition where the functional module A is located.

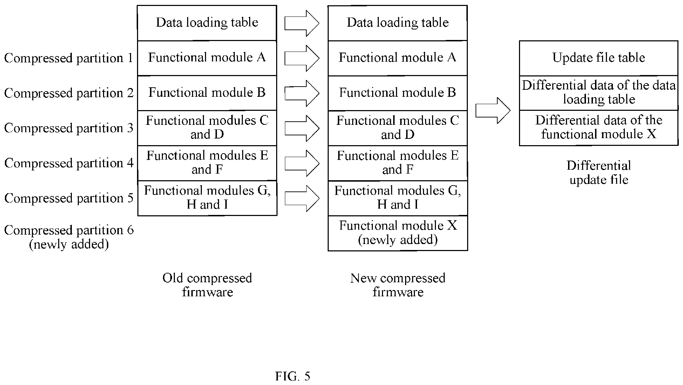

As a second example, as shown in FIG. 5, if the new compressed firmware only adds one functional module X compared with the old compressed firmware, a new compressed partition is added in the new compressed firmware to store the added functional module X, and the differential update file for the new compressed firmware and the old compressed firmware includes only the update file table, the differential data of the data loading table, and data of the added functional module X. The data of the added functional module X is differential data of the added partition where the added functional module X is located.

It can be seen from FIG. 4 and FIG. 5 that if there is no change between a functional module in a compressed partition in the new compressed firmware and the functional module in the compressed partition in the old compressed firmware, the compressed partition requires no updating, and no differential data is generated for the compressed partition. When there is a change between a functional module in a compressed partition in the new compressed firmware and the functional module in the compressed partition in the old compressed firmware, the compressed partition requires updating, and differential data is generated for the compressed partition.

Step S4: After acquiring the differential update file for the new compressed firmware and the old compressed firmware, the electronic device first updates the data loading table, that is, updates the data loading table of the old compressed firmware to the data loading table of the new compressed firmware. Then, the firmware is updated on a compressed partition basis (equivalent to the partition basis), that is, a compressed partition in the old compressed firmware (hereinafter referred to as an old compressed partition) is updated to a corresponding compressed partition in the new compressed firmware (hereinafter referred to as a new compressed partition). When the firmware is updated on the compressed partition basis, backup is also performed on the compressed partition basis to achieve power failure protection.

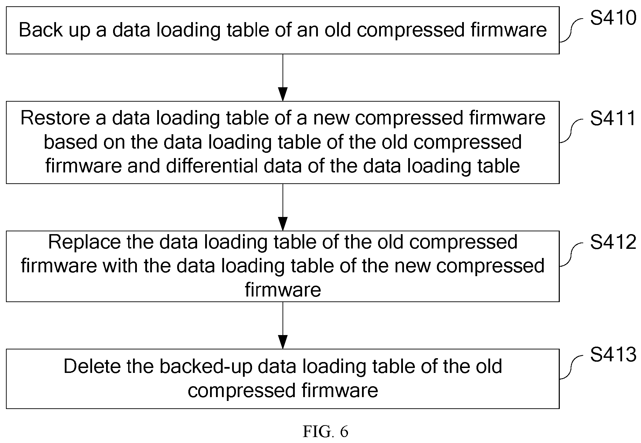

As an example, as shown in FIG. 6, the updating the data loading table specifically includes the following substeps:
Step S410: The data loading table of the old compressed firmware is backed up.
Step S411: The data loading table of the new compressed firmware is restored based on the data loading table of the old compressed firmware and the differential data of the data loading table.
Step S412: The data loading table of the old compressed firmware is replaced with the data loading table of the new compressed firmware.
Step S413: The backed-up data loading table of the old compressed firmware is deleted.

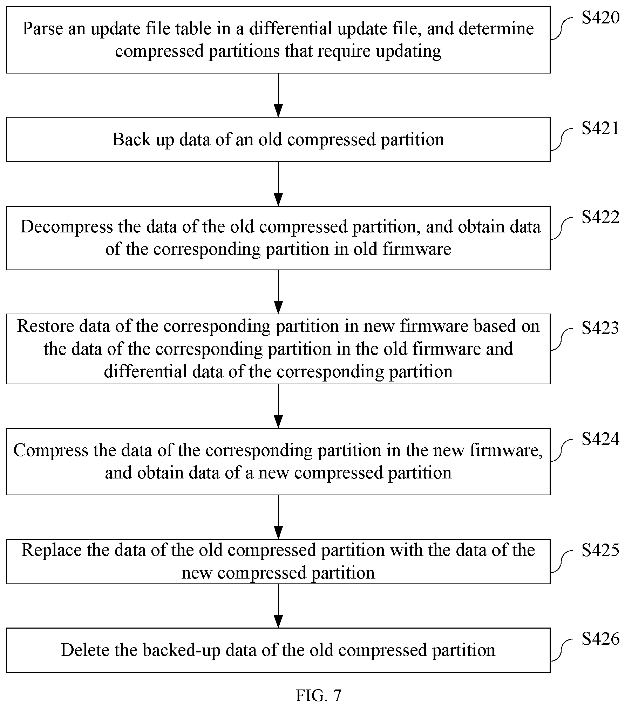

As a first example, as shown in FIG. 7, the updating the firmware on the compressed partition basis specifically includes the following substeps:
Step S420: The update file table in the differential update file is parsed, and compressed partitions that require updating and compressed partitions that require no updating are determined.
Step S421: Data of an old compressed partition (namely a to-be-updated compressed partition in the old compressed firmware) is backed up.
Step S422: The data of the old compressed partition is decompressed, and data of the corresponding partition in the old firmware is obtained.
Step S423: Data of the corresponding partition in the new firmware is restored based on the data of the corresponding partition in the old firmware and differential data of the corresponding partition.
Step S424: The data of the corresponding partition in the new firmware is compressed, and data of a new compressed partition (namely the corresponding compressed partition in the new compressed firmware) is obtained.
Step S425: The data of the old compressed partition is replaced with the data of the new compressed partition.
Step S426: The backed-up data of the old compressed partition is deleted.

The steps S421 to S426 are repeated until update operations of all the compressed partitions that require updating are completed. In this process, even if the electronic device experiences a power failure or restart, since the old compressed partition has been backed up, the electronic device can still obtain the data of the old compressed partition after the power failure or restart, generate the data of the new compressed partition based on the differential data of the corresponding partition, and replace and overwrite the data of the old compressed partition. That is, the power failure protection is achieved in a firmware update process.

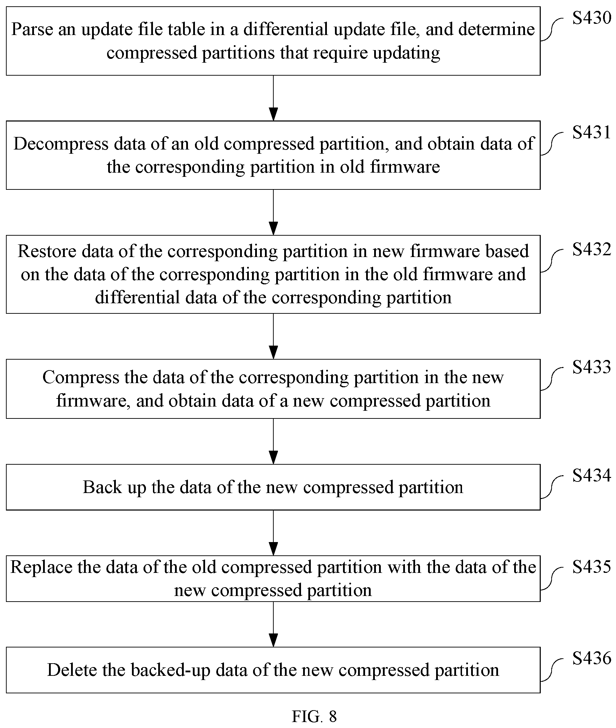

As a second example, as shown in FIG. 8, the updating the firmware on the compressed partition basis specifically includes the following substeps:
Step S430: The update file table in the differential update file is parsed, and compressed partitions that require updating and compressed partitions that require no updating are determined.
Step S431: Data of an old compressed partition (a to-be-updated compressed partition in the old compressed firmware) is decompressed, and data of the corresponding partition in the old firmware is obtained.
Step S432: Data of the corresponding partition in the new firmware is restored based on the data of the corresponding partition in the old firmware and differential data of the corresponding partition.
Step S433: The data of the corresponding partition in the new firmware is compressed, and data of a new compressed partition (namely the corresponding compressed partition in the new compressed firmware) is obtained.
Step S434: The data of the new compressed partition is backed up.
Step S435: The data of the old compressed partition is replaced with the data of the new compressed partition.
Step S436: The backed-up data of the new compressed partition is deleted.

The steps S431 to S436 are repeated until update operations of all the compressed partitions that require updating are completed. In this process, even if the electronic device experiences a power failure or restart, since the new compressed partition has been backed up, the electronic device can still obtain the data of the new compressed partition after the power failure or restart, and directly replace and overwrite the data of the old compressed partition. That is, the power failure protection is achieved in a firmware update process.

The two examples provided in FIG. 7 and FIG. 8 allow an electronic device without a battery or with insufficient battery power to perform firmware update anytime and anywhere. Even in the event of an unexpected shutdown or restart, there is no risk of device damage due to the firmware update.

A special situation may arise when the firmware is updated on the compressed partition basis in the step S4, that is, a volume of the new compressed partition may be greater than that of the old compressed partition. In this case, replacing the data of the old compressed partition with the data of the new compressed partition will partially replace data of a subsequent old compressed partition, and as a result, the subsequent old compressed partition cannot be normally updated, resulting in a failure of the entire firmware update. Therefore, when updating a compressed partition, the present disclosure determines in advance whether data of a subsequent old compressed partition will be overwritten. If the data of the subsequent old compressed partition will be overwritten, the overwritten data of the subsequent old compressed partition is backed up together when the old compressed partition (or a new compressed partition) is backed up.

It is assumed that there is a change between compressed partition M in the new compressed firmware and the compressed partition M in the old compressed firmware, the new compressed partition M is greater than the old compressed partition M, and compressed partition N is immediately following the compressed partition M. Δ is adopted to represent a difference between a data size of the new compressed partition M and a data size of the old compressed partition M, where Δ>0.

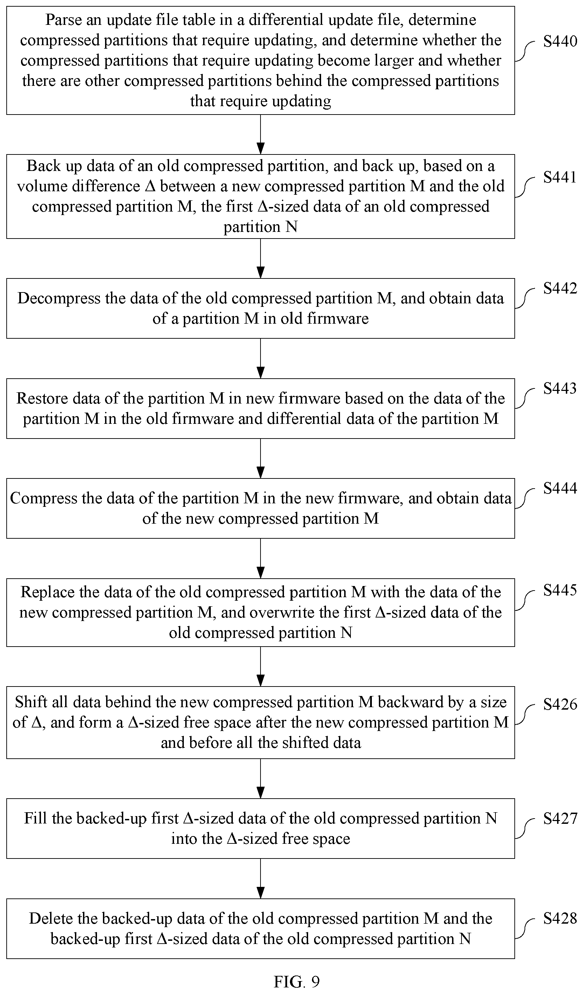

As a third example, as shown in FIG. 9, the updating the firmware on the compressed partition basis specifically includes the following substeps:
Step S440: The update file table in the differential update file is parsed, compressed partitions that require updating and compressed partitions that require no updating are determined, and whether the compressed partitions that require updating become larger and whether there are other compressed partitions behind the compressed partitions that require updating are determined. If a volume of compressed partition M that requires updating becomes larger and there is compressed partition N behind the compressed partition M, step S441 is performed. If the volume of the compressed partition M that requires updating becomes larger but there is no other compressed partition behind the compressed partition M, the step S421 in FIG. 7 is performed. If the volume of compressed partition M that requires updating does not become larger, the step S421 in FIG. 7 is performed.
Step S441: Data of the old compressed partition M is backed up, and first Δ-sized data of the old compressed partition N is backed up based on a volume difference Δ between new compressed partition M and the old compressed partition M. Partition N is a partition immediately following partition M, and Δ>0.
Step S442: The data of the old compressed partition M is decompressed, and data of the partition M in the old firmware is obtained.
Step S443: Data of the partition M in the new firmware is restored based on the data of the partition M in the old firmware and differential data of the partition M.
Step S444: The data of the partition M in the new firmware is compressed, and data of the new compressed partition M is obtained.
Step S445: The data of the old compressed partition M is replaced with the data of the new compressed partition M. In the process, the first Δ-sized data of the old compressed partition N is also overwritten, such that data of the old compressed partition N becomes incomplete.
Step S446: Whether the compressed partition N requires updating is determined; and if the compressed partition N requires no updating, step S447 is performed; or if the compressed partition N requires updating, remaining data of the old compressed partition N after the first Δ-sized data is removed and the backed-up first Δ-sized data of the old compressed partition N are combined into complete data of the old compressed partition N, the step S440 is performed, the compressed partition M mentioned in the step S440 is changed to the compressed partition N, and the compressed partition N mentioned in the step S440 is changed to a next compressed partition of the compressed partition N.
Step S447: All data behind the new compressed partition M is shifted backward by a size of Δ. The data behind the new compressed partition M includes: the remaining data of the old compressed partition N after the first Δ-sized data is removed, and data of each old compressed partition behind the old compressed partition N. After this step is performed, a Δ-sized free space is formed behind the new compressed partition M and before all the shifted data.
Step S448: The backed-up first Δ-sized data of the old compressed partition N is filled into the Δ-sized free space. Then, the data of the old compressed partition N becomes complete.
Step S449: The backed-up data of the old compressed partition M and the backed-up first Δ-sized data of the old compressed partition N are deleted.

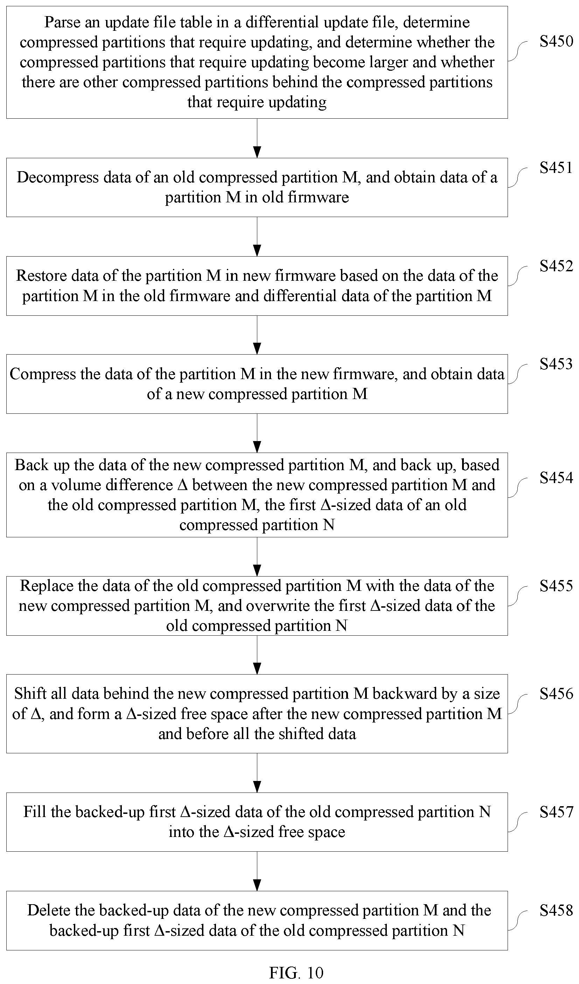

As a fourth example, as shown in FIG. 10, the updating the firmware on the compressed partition basis specifically includes the following substeps:
Step S450: The update file table in the differential update file is parsed, and compressed partitions that require updating and compressed partitions that require no updating are determined. In addition, whether the compressed partitions that require updating become larger and whether there are other compressed partitions behind the compressed partitions that require updating are determined. If a volume of compressed partition M that requires updating becomes larger and there is compressed partition N behind the compressed partition M, step S451 is performed. If the volume of the compressed partition M that requires updating becomes larger but there is no other compressed partition behind the compressed partition M, the step S431 in FIG. 8 is performed. If the volume of compressed partition M that requires updating does not become larger, the step S431 in FIG. 8 is performed.
Step S451: Data of the old compressed partition M is decompressed, and data of partition M in the old firmware is obtained.
Step S452: Data of the partition M in the new firmware is restored based on the data of the partition M in the old firmware and differential data of the partition M.
Step S453: The data of the partition M in the new firmware is compressed, and data of new compressed partition M is obtained.
Step S454: The data of the new compressed partition M is backed up, and the first Δ-sized data of the old compressed partition N is backed up based on a volume difference Δ between the new compressed partition M and the old compressed partition M. Partition N is a partition immediately following the partition M, and Δ>0.
Step S455: The data of the old compressed partition M is replaced with the data of the new compressed partition M. In the process, the first Δ-sized data of the old compressed partition N is also overwritten, such that data of the old compressed partition N becomes incomplete.
Step S456: Whether the compressed partition N requires updating is determined; and if the compressed partition N requires no updating, step S457 is performed; or if the compressed partition N requires updating, remaining data of the old compressed partition N after the first Δ-sized data is removed and the backed-up first Δ-sized data of the old compressed partition N are combined into complete data of the old compressed partition N, the step S450 is performed, the compressed partition M mentioned in the step S450 is changed to the compressed partition N, and the compressed partition N mentioned in the step S450 is changed to a next compressed partition of the compressed partition N.
Step S457: All data behind the new compressed partition M is shifted backward by a size of Δ. Therefore, a Δ-sized free space is formed behind the new compressed partition M and before all the shifted data.
Step S458: The backed-up first Δ-sized data of the old compressed partition N is filled into the Δ-sized free space. Then, the data of the old compressed partition N becomes complete.
Step S459: The backed-up data of the new compressed partition M and the backed-up first Δ-sized data of the old compressed partition N are deleted.

The two examples provided in FIG. 9 and FIG. 10 effectively address an issue of how to update a compressed partition when a volume of a new compressed partition is greater than that of the old compressed partition.

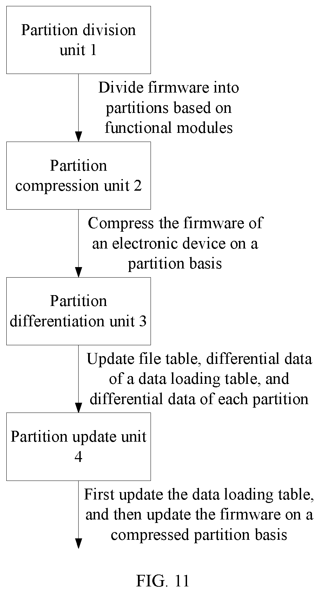

Referring to FIG. 11, a system for over-the-air update of compressed firmware provided in the present disclosure includes partition division unit 1, partition compression unit 2, partition differentiation unit 3, and partition update unit 4. The system in FIG. 11 corresponds to the method in FIG. 1.

The partition division unit 1 is configured to divide firmware of an electronic device into a plurality of partitions at a firmware compilation stage, where each partition includes one or more functional modules, and each partition has substantially a same size after being compressed.

The partition compression unit 2 is configured to compress the firmware of the electronic device on a partition basis, and obtain compressed firmware of the electronic device. During the compression, relevant information of a compressed partition is recorded, including a running address and a size of uncompressed data in the compressed partition in a memory of the electronic device, a storage address and a size of compressed data in a non-volatile memory of the electronic device, a check value of the compressed data, and the like. Relevant information of all compressed partitions is stored in a header of the complete compressed firmware of the electronic device in a form of a data loading table. There is also an update file table in the header of the complete compressed firmware of the electronic device. The update file table records compressed partitions that require updating and compressed partitions that require no updating.

The partition differentiation unit 3 is configured to generate the update file table, and record compressed partitions that require updating and compressed partitions that require no updating; is further configured to perform a differential operation on a data loading table of new compressed firmware and the data loading table of the old compressed firmware, and obtain differential data of the data loading table; and is further configured to perform the differential operation on decompressed data of each partition in new firmware and decompressed data of the corresponding partition in the old firmware, obtain differential data of each partition, and sequentially combine the update file table, the differential data of the data loading table, and the differential data of each partition into a complete differential update file for the new compressed firmware and the old compressed firmware.

The partition update unit 4 is configured to first update the data loading table, that is, update the data loading table of the old compressed firmware to the data loading table of the new compressed firmware; and then update the firmware on a compressed partition basis, that is, update a compressed partition in the old compressed firmware to the corresponding compressed partition in the new compressed firmware.

Compared with the prior art, the method for over-the-air update of compressed firmware provided in the present disclosure achieves the following technical innovations and beneficial effects.

Firstly, the present disclosure compresses firmware of an electronic device, and stores compressed firmware in a non-volatile memory of the electronic device, thereby reducing a storage space occupied by the firmware.

Secondly, the present disclosure divides the firmware of the electronic device into a plurality of partitions based on functional modules, and compresses the firmware on a partition basis. Any modification or addition of a functional module only affects data in one partition without changing or affecting data in other partitions, thereby achieving isolation.

Thirdly, the present disclosure generates differential data between uncompressed new and old partitions on the partition basis, thereby obtaining an efficient differential result and reducing a volume of a differential update file for new compressed firmware and the old compressed firmware. For example, if new firmware and the old firmware differ by only 3 bytes, a generated differential update file is only 1 KB, which truly reflects a data change of the functional module.

Fourthly, the present disclosure updates the firmware on a compressed partition basis. Data of only one compressed partition needs to be backed up for power failure protection during each update, thereby lowering a requirement of the power failure protection for a backup space. Regarding a special case where updating a compressed partition may damage data of a subsequent compressed partition, the present disclosure effectively solves this technical difficulty by determining in advance whether a new compressed partition will damage a subsequent old compressed partition, and backing up a damaged part together if the new compressed partition will damage the subsequent old compressed partition.

The above described are merely preferred embodiments of the present disclosure, which are not intended to limit the present disclosure. Various changes and modifications can be made to the present disclosure by those skilled in the art. Any modifications, equivalents, improvements, and the like, made within the spirit and principle of the present disclosure shall all fall within the protection scope of the present disclosure.

## Claims

1. A method for over-the-air update of compressed firmware, **characterized by** comprising following steps:
step S1: dividing firmware of an electronic device into a plurality of partitions at a firmware compilation stage, wherein each of the plurality of partitions comprises one or more functional modules, and each of the plurality of partitions has substantially a same size after being compressed;
step S2: compressing the firmware of the electronic device on a partition basis, and obtaining compressed firmware of the electronic device, wherein a partition that is compressed is referred to as a compressed partition; recording relevant information of the compressed partition during the compression; and storing relevant information of all compressed partitions in a header of the compressed firmware of the electronic device in a form of a data loading table;
step S3: generating an update file table; performing a differential operation on a data loading table of new compressed firmware and a data loading table of old compressed firmware, and obtaining differential data of the data loading table; performing the differential operation on decompressed data of each partition in new firmware and decompressed data of the corresponding partition in old firmware, and obtaining differential data of each partition; and sequentially assembling the above three parts into a differential update file for the new compressed firmware and the old compressed firmware; and
step S4: updating, by the electronic device after acquiring the differential update file for the new compressed firmware and the old compressed firmware, the data loading table, and then updating the firmware on a compressed partition basis.

2. The method for over-the-air update of compressed firmware according to claim 1, **characterized in that** in the step S2, the relevant information of the compressed partition comprises a running address and a size of uncompressed data in the compressed partition in a memory of the electronic device, a storage address and a size of compressed data in a non-volatile memory of the electronic device, and a check value of the compressed data.

3. The method for over-the-air update of compressed firmware according to claim 1, **characterized in that** in the step S3, the update file table records compressed partitions that require updating and compressed partitions that require no updating; if there is no change between a functional module in a compressed partition in the new compressed firmware and the functional module in the compressed partition in the old compressed firmware, no differential data is generated for the compressed partition; and differential data is generated for a compressed partition only when there is a change between a functional module in the compressed partition in the new compressed firmware and the functional module in the compressed partition in the old compressed firmware.

4. The method for over-the-air update of compressed firmware according to claim 1, **characterized in that** in the step S3, if the new compressed firmware adds a functional module compared with the old compressed firmware, a new compressed partition is added in the new compressed firmware to store the added functional module.

5. The method for over-the-air update of compressed firmware according to claim 1, **characterized in that** in the step S4, the updating the data loading table specifically comprises following substeps:
step S410: backing up the data loading table of the old compressed firmware;
step S411: restoring the data loading table of the new compressed firmware based on the data loading table of the old compressed firmware and the differential data of the data loading table;
step S412: replacing the data loading table of the old compressed firmware with the data loading table of the new compressed firmware; and
step S413: deleting the backed-up data loading table of the old compressed firmware.

6. The method for over-the-air update of compressed firmware according to claim 2, **characterized in that** in the step S4, the updating the firmware on the compressed partition basis specifically comprises following substeps:
step S420: parsing the update file table in the differential update file, and determining compressed partitions that require updating and compressed partitions that require no updating;
step S421: backing up data of an old compressed partition;
step S422: decompressing the data of the old compressed partition, and obtaining data of the corresponding partition in the old firmware;
step S423: restoring data of the corresponding partition in the new firmware based on the data of the corresponding partition in the old firmware and differential data of the corresponding partition;
step S424: compressing the data of the corresponding partition in the new firmware, and obtaining data of a new compressed partition;
step S425: replacing the data of the old compressed partition with the data of the new compressed partition;
step S426: deleting the backed-up data of the old compressed partition; and
repeating the steps S421 to S426 until update operations of all the compressed partitions that require updating are completed.

7. The method for over-the-air update of compressed firmware according to claim 2, **characterized in that** in the step S4, the updating the firmware on the compressed partition basis specifically comprises following substeps:
step S430: parsing the update file table in the differential update file, and determining compressed partitions that require updating and compressed partitions that require no updating;
step S431: decompressing data of an old compressed partition, and obtaining data of the corresponding partition in the old firmware;
step S432: restoring data of the corresponding partition in the new firmware based on the data of the corresponding partition in the old firmware and differential data of the corresponding partition;
step S433: compressing the data of the corresponding partition in the new firmware, and obtaining data of a new compressed partition;
step S434: backing up the data of the new compressed partition;
step S435: replacing the data of the old compressed partition with the data of the new compressed partition;
step S436: deleting the backed-up data of the new compressed partition; and
repeating the steps S431 to S436 until update operations of all the compressed partitions that require updating are completed.

8. The method for over-the-air update of compressed firmware according to claim 2, **characterized in that** in the step S4, the updating the firmware on the compressed partition basis specifically comprises following substeps:
step S440: parsing the update file table in the differential update file, determining compressed partitions that require updating and compressed partitions that require no updating, and determining whether the compressed partitions that require updating become larger and whether there are other compressed partitions behind the compressed partitions that require updating; and if a volume of a compressed partition M that requires updating becomes larger and there is a compressed partition N behind the compressed partition M, proceeding to step S441;
step S441: backing up data of the old compressed partition M, and backing up, based on a volume difference Δ between a new compressed partition M and the old compressed partition M, first Δ-sized data of the old compressed partition N, wherein a partition N is a partition immediately following a partition M, and Δ>0;
step S442: decompressing the data of the old compressed partition M, and obtaining data of the partition M in the old firmware;
step S443: restoring data of the partition M in the new firmware based on the data of the partition M in the old firmware and differential data of the partition M;
step S444: compressing the data of the partition M in the new firmware, and obtaining data of the new compressed partition M;
step S445: replacing the data of the old compressed partition M with the data of the new compressed partition M, wherein in the process, the first Δ-sized data of the old compressed partition N is also overwritten;
step S446: determining whether the compressed partition N requires updating; and if the compressed partition N requires no updating, proceeding to step S447; or if the compressed partition N requires updating, combining remaining data of the old compressed partition N after the first Δ-sized data is removed and the backed-up first Δ-sized data of the old compressed partition N into complete data of the old compressed partition N, proceeding to step S440, changing the compressed partition M mentioned in the step S440 to the compressed partition N, and changing the compressed partition N mentioned in the step S440 to a next compressed partition of the compressed partition N;
step S447: shifting all data behind the new compressed partition M backward by a size of Δ, wherein the data behind the new compressed partition M comprises: the remaining data of the old compressed partition N after the first Δ-sized data is removed, and data of each old compressed partition behind the old compressed partition N; and after this step is performed, a Δ-sized free space is formed behind the new compressed partition M and before all the shifted data;
step S448: filling the backed-up first Δ-sized data of the old compressed partition N into the Δ-sized free space, such that data of the old compressed partition N becomes complete;
step S449: deleting the backed-up data of the old compressed partition M and the backed-up first Δ-sized data of the old compressed partition N; and
repeating the steps S441 to S449 until update operations of all the compressed partitions that require updating are completed.

9. The method for over-the-air update of compressed firmware according to claim 2, **characterized in that** in the step S4, the updating the firmware on the compressed partition basis specifically comprises following substeps:
step S450: parsing the update file table in the differential update file, determining compressed partitions that require updating and compressed partitions that require no updating, and determining whether the compressed partitions that require updating become larger and whether there are other compressed partitions behind the compressed partitions that require updating; and if a volume of a compressed partition M that requires updating becomes larger and there is a compressed partition N behind the compressed partition M, proceeding to step S451;
step S451: decompressing data of the old compressed partition M, and obtaining data of a partition M in the old firmware;
step S452: restoring data of the partition M in the new firmware based on the data of the partition M in the old firmware and differential data of the partition M;
step S453: compressing the data of the partition M in the new firmware, and obtaining data of a new compressed partition M;
step S454: backing up the data of the new compressed partition M, and backing up, based on a volume difference Δ between the new compressed partition M and the old compressed partition M, the first Δ-sized data of the old compressed partition N, wherein a partition N is a partition immediately following the partition M, and Δ>0;
step S455: replacing the data of the old compressed partition M with the data of the new compressed partition M, wherein in the process, the first Δ-sized data of the old compressed partition N is also overwritten, such that data of the old compressed partition N becomes incomplete;
step S456: determining whether the compressed partition N requires updating; and if the compressed partition N requires no updating, proceeding to step S457; or if the compressed partition N requires updating, combining remaining data of the old compressed partition N after the first Δ-sized data is removed and the backed-up first Δ-sized data of the old compressed partition N into complete data of the old compressed partition N, proceeding to step S450, changing the compressed partition M mentioned in the step S450 to the compressed partition N, and changing the compressed partition N mentioned in the step S450 to a next compressed partition of the compressed partition N;
step S457: shifting all data behind the new compressed partition M backward by a size of Δ, such that a Δ-sized free space is formed behind the new compressed partition M and before all the shifted data;
step S458: filling the backed-up first Δ-sized data of the old compressed partition N into the Δ-sized free space, such that the data of the old compressed partition N becomes complete;
step S459: deleting the backed-up data of the new compressed partition M and the backed-up first Δ-sized data of the old compressed partition N; and
repeating the steps S451 to S459 until update operations of all the compressed partitions that require updating are completed.

10. A system for over-the-air update of compressed firmware, **characterized by** comprising a partition division unit, a partition compression unit, a partition differentiation unit, and a partition update unit, wherein
the partition division unit is configured to divide firmware of an electronic device into a plurality of partitions at a firmware compilation stage, wherein each of the plurality of partitions comprises one or more functional modules, and each of the plurality of partitions has substantially a same size after being compressed;
the partition compression unit is configured to compress the firmware of the electronic device on a partition basis, and obtain compressed firmware of the electronic device, wherein a partition that is compressed is referred to as a compressed partition; record relevant information of the compressed partition during the compression; and store relevant information of all compressed partitions in a header of the compressed firmware of the electronic device in a form of a data loading table;
the partition differentiation unit is configured to generate an update file table; perform a differential operation on a data loading table of new compressed firmware and a data loading table of old compressed firmware, and obtain differential data of the data loading table; perform the differential operation on decompressed data of each partition in new firmware and decompressed data of the corresponding partition in old firmware, and obtain differential data of each partition; and sequentially combine the above three parts into a differential update file for the new compressed firmware and the old compressed firmware; and
the partition update unit is configured to: after the electronic device acquires the differential update file for the new compressed firmware and the old compressed firmware, update the data loading table, and then update the firmware on a compressed partition basis.
